# EUROPÄISCHE PATENTSCHRIFT

(11) **EP 1 958 988 B1**
(45) Veröffentlichungstag und Bekanntmachung des Hinweises auf die Patenterteilung: **22.04.2009**
(21) Anmeldenummer: 08150742.8
(22) Anmeldetag: 29.01.2008
(51) Int. Cl.: C08L 83/04

(54) **Additionsvernetzbare Siliconmassen mit geringen Reibungskoeffizienten**
Addition-crosslinkable silicone compositions with low coefficients of friction
Compositions de silicone réticulables par addition présentant und faible coefficient de friction

(30) Priorität: 15.02.2007 DE 102007007569
(43) Veröffentlichungstag der Anmeldung: 20.08.2008
(73) Patentinhaber: Wacker Chemie AG, 81737 München (DE)
(72) Erfinder: Wörner, Christof, 84489 Burghausen (DE); Primas, Willi, 84359 Simbach (DE)
(74) Vertreter: Fritz, Helmut

(56) Entgegenhaltungen:
- WO-A-01/90266
- US-B1- 6 663 967

## Beschreibung

Die Erfindung betrifft additionsvernetzbare Siliconmassen, deren Vulkanisate geringe Reibungskoeffizienten aufweisen, deren Herstellung und Formteile aus den vernetzten Siliconmassen.

Bekanntermaßen kann durch Zusatz von niederviskosen Siliconölen, die eine teilweise Unverträglichkeit zu Siliconelastomeren aufweisen, der Reibungskoeffizient von Siliconelastomeren verringert werden. In der Regel werden dabei phenylhaltige Siliconöle mit einer Viskosität von 5-1000 mPas zu der unvernetzten additionsvernetzenden Siliconmasse hinzugefügt. In dieser unvernetzten Siliconmasse ist die Löslichkeit der verwendeten phenylhaltigen Siliconöle ausreichend, so dass keine Phasentrennung stattfindet. Nach der Vernetzung schwitzen die phenylhaltigen Siliconöle aus dem vernetzten Siliconkautschuk aus, so dass mit der Zeit ein Ölfilm auf der Oberfläche gebildet und damit der Reibungskoeffizient reduziert wird. Der Nachteil dieser Mischungen besteht allerdings darin, dass der Ölfilm zur Reduzierung des Reibungskoeffizienten nicht unmittelbar nach der Vernetzung gebildet wird, sondern erst nach einigen Stunden. Außerdem ist die Ausschwitzrate zeit- und temperaturabhängig, so dass der Reibungskoeffizient von den Lagerbedingungen abhängt. Ein weiteres Problem dieser Systeme besteht darin, dass das Öl immer weiter ausschwitzt, so dass sich ein konstanter Ölgehalt an der Silikonoberfläche erst nach Wochen einstellt. Des Weiteren ist das an die Oberfläche migrierte niedermolekulare Öl nicht gebunden und kann einfach durch Abwischen entfernt werden. Damit kann ein niedriger Reibungskoeffizient nicht dauerhaft sichergestellt werden. Das and die Oberfläche tretende Siliconöl führt auch dazu, dass bei der Förderung der Fertigteile durch den Siliconölfilm die Transportbänder mit Siliconöl verschmutzt werden, so dass diese aufwändig gereinigt werden müssen.

In EP 649877 wird beschrieben, dass durch Zusatz von inkompatiblen niederviskosen Silikonölen, wie z.B. Silikonölen mit Dimethylsiloxy und Diphenylsiloxy-Einheiten oder Arylphosphorsäureestern, zu additions- bzw. peroxidisch vernetzenden Massen ein Schmierfilm auf der Oberfläche des vernetzten Siliconelastomers erzeugt werden kann. Allerdings bildet sich dieser Schmierfilm erst nach einem Tag aus, so dass der Reibungskoeffizient erst nach der Lagerung der vernetzten Teile verringert wird.

Der vorliegenden Erfindung liegt daher die Aufgabe zugrunde, additionsvernetzbare Siliconmassen bereitzustellen, die zu Siliconelastomeren mit niedrigem Reibungskoeffizienten vernetzen, wobei kein schmieriger Ölfilm auf der Oberfläche des Siliconelastomers gebildet und der Reibungskoeffizient sofort nach der Vernetzung verringert wird.

Gegenstand der Erfindung sind additionsvernetzbare Siliconmassen, enthaltend
(A) 100 Gewichtsteile Alkenylgruppen aufweisendes Polydiorganosiloxan mit einer Viskosität von 5000 bis 50 000 000 mPas bei 25°C, mindestens 2 Alkenylgruppen pro Molekül und mindestens 0,15 Mol.-% Alkenylsiloxaneinheiten, bezogen auf alle Siloxaneinheiten,
(B) 1 bis 50 Gewichtsteile Polydiorganosiloxan mit einer Viskosität von mindestens 5 000 000 mPas bei 25°C, wobei das Polydiorganosiloxan keine Alkenylgruppen aufweist,
(C) SiH-funktionelles Vernetzungsmittel,
(D) Hydrosilylierungskatalysator, und
(E) 3-90 Gewichtsteile eines Füllstoffs mit einer spezifischen Oberfläche nach BET von mindestens 50 m²/g.

Durch Verwendung des Alkenylgruppen haltigen Polydiorganosiloxans (A) in Kombination mit dem nicht funktionalisierten Polydiorganosiloxan (B), werden Siliconelastomere erhalten, die einen reduzierten Reibungskoeffizienten aufweisen, ohne dass ausschwitzende niederviskose Siliconöle verwendet werden, welche einen Ölfilm auf der Siliconoberfläche bilden.

Durch Einsatz des nicht funktionalisierten Polydiorganosiloxans (B) werden die anderen mechanischen Eigenschaften nicht verschlechtert.

Die Alkenylgruppen im Polydiorganosiloxan (A) können sich am Kettenende, in der Kette oder sowohl am Kettenende als auch in der Kette befinden. Es können auch Mischungen aus unterschiedlichen Polydiorganosiloxanen (A) eingesetzt werden, wobei aber jedes Polymermolekül mindestens 2 Alkenylgruppen aufweisen muss und im Mittel mindestens 0,15 Mol.-% Alkenylsiloxaneinheiten, bezogen auf alle Siloxaneinheiten vorhanden sein müssen.

Ein bevorzugtes Alkenylgruppen haltiges Polydiorganosiloxan (A1) weist bei 25°C eine Viskosität von mindestens 5000 mPas, insbesondere mindestens 10 000 mPas und höchstens 2 000 000 mPas, insbesondere höchstens 1 000 000 mPas auf. Vorzugsweise befinden sich Alkenylgruppen an den Kettenenden.

Ein weiteres bevorzugtes Alkenylgruppen haltiges Polydiorganosiloxan (A2) weist bei 25°C eine Viskosität von mindestens 2 000 000 mPas, besonders bevorzugt mindestens 9 000 000 mPas und höchstens 50 000 000 mPas, insbesondere höchstens 45 000 000 mPas, besonders bevorzugt höchstens 40 000 000 mPas auf. Vorzugsweise befinden sich Alkenylgruppen an den Kettenenden und in der Kette.

Das Alkenylgruppen haltige Polydiorganosiloxan (A) ist vorzugsweise aufgebaut aus mindestens 2 Einheiten, die ausgewählt werden aus den allgemeinen Formeln (1) und (2)

[R₂R¹SiO_{1/2}] (1),

[RR¹SiO_{2/2}] (2),

und weiteren Einheiten, die ausgewählt werden aus den allgemeinen Formeln (3) und (4)

[R₃SiO_{1/2}] (3),

[R₂SiO_{2/2}] (4),

wobei
- **R**: einwertige, gegebenenfalls halogen- oder cyanosubstituierte, über SiC-gebundene C₁-C₁₈-Kohlenwasserstoffreste, die frei sind von aliphatischen Kohlenstoff-Kohlenstoff Mehrfachbindungen und
- **R¹**: einwertige, gegebenenfalls halogen- oder cyanosubstituierte, gegebenenfalls über eine organische zweiwertige Gruppe an Silicium gebundene C₁-C₁₀-Alkenylgruppen bedeuten.

Beispiele für unsubstituierte Kohlenwasserstoffeste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest, sowie der Fluorenylrest.

Beispiele für substituierte Kohlenwasserstoffreste als Reste **R** sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

Bei dem Kohlenwasserstoffrest **R** handelt es sich bevorzugt um unsubstituierte und substituierte C₁- bis C₆-Alkylreste und den Phenylrest, insbesondere um den Methyl- und Phenylrest.

Die Alkenylgruppen **R¹** sind einer Anlagerungsreaktion mit dem SiH-funktionellen Vernetzungsmittel (C) zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R¹** an Silicium der Polymerkette gebunden sein können, bestehen beispielsweise aus Oxyalkyleneinheiten, wie solche der allgemeinen Formel (5)

-(O)ₘ[(CH₂)ₙO]ₒ- (5),

in der
- **m**: die Werte 0 oder 1, insbesondere 0,
- **n**: Werte von 1 bis 4, insbesondere 1 oder 2 und
- **o**: Werte von 1 bis 20, insbesondere 1 bis 5 bedeuten.
Die Oxyalkyleneinheiten der allgemeinen Formel (5) sind links an ein Siliciumatom gebunden.

Das Polydiorganosiloxan (B) ist vorzugsweise aufgebaut aus Einheiten der vorstehenden allgemeinen Formeln (3) und (4).

Bevorzugt weist das Polydiorganosiloxan (B) bei 25°C eine Viskosität von mindestens 7 000 000 mPas, besonders bevorzugt mindestens 9 000 000 mPas und höchstens 40 000 000 mPas, insbesondere höchstens 35 000 000 mPas auf.

Bevorzugt weist das Polydiorganosiloxan (B) einen OH-Gehalt, bezogen auf Si-gebundene OH-Gruppen, von maximal 100 Gew.-ppm auf. Besonders bevorzugt ist der OH-Gehalt maximal 50 Gew.-ppm.

Bevorzugt stimmen mindestens 80% der Gruppen **R** von (B) mit den Gruppen **R** von (A) überein, besonders bevorzugt mindestens 90%.

Das SiH-funktionelle Vernetzungsmittel (C) ist vorzugsweise eine siliciumorganische Verbindung oder eine Mischung aus mindestens 2 siliciumorganischen Verbindungen, welche mindestens zwei, bevorzugt mindestens drei an Silicium gebundene Wasserstoffatome pro Molekül enthalten.

Bevorzugt ist die Verwendung einer drei oder mehr SiH-Bindungen pro Molekül enthaltenden SiH-funktionellen Vernetzers (C).

Der Wasserstoffgehalt des SiH-funktionellen Vernetzers (C), welcher sich ausschließlich auf die direkt an Siliciumatome gebundenen Wasserstoffatome bezieht, liegt vorzugsweise im Bereich von 0,002 bis 1,7 Gew.-% Wasserstoff, besonders bevorzugt von 0,1 bis 1,7 Gew.-% Wasserstoff.

Der SiH-funktionelle Vernetzer (C) enthält vorzugsweise mindestens drei und höchstens 600 Siliciumatome pro Molekül. Besonders bevorzugt ist die Verwendung von SiH-funktionellem Vernetzer (C), der 4 bis 200 Siliciumatome pro Molekül enthält.

Die Struktur des SiH-funktionellen Vernetzers (C) kann linear, verzweigt, cyclisch oder netzwerkartig sein.

Der SiH-funktionelle Vernetzer (C) ist vorzugsweise in einer solchen Menge in der vernetzbaren Siliconmasse enthalten, dass das Molverhältnis von SiH-Gruppen zu Kohlenstoff-Kohlenstoff-Mehrfachbindungen mindestens 1,1 : 1, bevorzugt 1,1 bis 5 : 1 insbesondere bevorzugt 1,1 bis 3 : 1 beträgt. Die Kohlenstoff-Kohlenstoff-Mehrfachbindungen stammen aus den Alkenylgruppen der Polyorganosiloxane (A) gegebenenfalls den Kohlenstoff-Kohlenstoff-Mehrfachbindungen der Füllstoffe (F).

Als Hydrosilylierungskatalysator (D) können alle bekannten Katalysatoren eingesetzt werden, welche die bei der Vernetzung von additionsvernetzenden Siliconmassen ablaufenden Hydrosilylierungsreaktionen katalysieren.

Als Hydrosilylierungskatalysatoren (D) werden insbesondere Metalle und deren Verbindungen aus der Gruppe Platin, Rhodium, Palladium, Ruthenium und Iridium eingesetzt. Vorzugsweise wird Platin verwendet.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtC1₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP 1 077 226 A1 und EP 0 994 159 A1 beschriebenen Platinverbindungen, deren diesbezügliche Offenbarung auch Gegenstand dieser Anmeldung sein soll.

Der Hydrosilylierungskatalysator (D) kann in jeder beliebigen Form eingesetzt werden, beispielsweise auch in Form von Hydrosilylierungskatalysator enthaltenden Mikrokapseln, oder Polyorganosiloxanpartikeln, wie beschrieben in EP 1 006 147 A1, deren diesbezügliche Offenbarung auch Gegenstand dieser Anmeldung sein soll.

Der Gehalt an Hydrosilylierungskatalysatoren (D) wird vorzugsweise so gewählt, dass die additionsvernetzbare Siliconmasse einen Pt-Gehalt von 0,1 bis 200 ppm, insbesondere von 0,5 bis 40 ppm besitzt.

Der verstärkende Füllstoff (E) wird vorzugsweise ausgewählt aus der Gruppe enthaltend gefällte und pyrogene Kieselsäuren sowie Ruß.

Bevorzugt sind gefällte und pyrogene Kieselsäuren, sowie Gemische derselben. Besonders bevorzugt sind mit Silyliermittel oberflächenbehandelte pyrogene Kieselsäure. Die Hydrophobierung der Kieselsäure kann entweder vor der Einarbeitung in das Polyorganosiloxan (A) oder (B) erfolgen oder auch in Gegenwart eines Polyorganosiloxans nach dem in-situ Verfahren. Beide Verfahren können sowohl im Batch-Prozess als auch kontinuierlich durchgeführt werden. Als Silylier-Agenzien können alle dem Fachmann bekannten Hydrophobiermittel verwendet werden. Diese sind vorzugsweise Silazane, insbesondere Hexamethyldisilazan und/oder 1,3-Divinyl-1,1,3,3-tetramethyldisilazan, und/oder Polysilazane, wobei auch zusätzlich Wasser eingesetzt werden kann, verwendet. Zusätzlich können auch andere Silylier-Agenzien, wie beispielsweise SiOH- und/oder SiCl- und/oder Alkoxy-funktionelle Silane bzw. Siloxane als Hydrophobiermittel verwendet werden. Ebenso können zyklische, lineare oder verzweigte nicht-funktionelle Organosiloxane, wie beispielsweise Octamethylcyclotetrasiloxan oder Polydimethylsiloxan, jeweils für sich genommen oder zusätzlich zu Silazanen als Silylier-Agenzien eingesetzt werden. Um die Hydrophobierung zu beschleunigen, ist auch der Zusatz von katalytisch aktiven Additiven, wie beispielsweise Hydroxiden, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugt sind gefällte oder pyrogene Kieselsäuren. Besonders bevorzugt ist eine Kieselsäure mit einer spezifischen Oberfläche nach BET von 80-400 m²/g, besonders bevorzugt 100-400 m²/g.

Vorzugsweise enthalten die Siliconmassen mindestens 3 Gew.-%, besonders bevorzugt mindestens 5 Gew.-%, insbesondere mindestens 10 Gew.-% und höchstens 40 Gew.-% Füllstoffanteil (E), jeweils bezogen auf die Bestandteile (A) + (B) + (C) .

Die Siliconmassen können wahlweise als weiteren Bestandteil (F) mögliche Zusätze zu einem Anteil von 0 bis 70 Gew.-%, vorzugsweise 0,0001 bis 40 Gew.-%, enthalten. Diese Zusätze können beispielsweise harzartige Polyorganosiloxane, die von den Polyorganosiloxanen (A) und (B) verschieden sind, Dispergierhilfsmittel, Lösungsmittel, Haftvermittler, Pigmente, Farbstoffe, Weichmacher, organische Polymere, Hitzestabilisatoren, Inhibitoren usw. sein. Hierzu zählen Zusätze, wie Farbstoffe, Pigmente usw.. Des Weiteren können als Bestandteil thixotropierende Bestandteile, wie hochdisperse Kieselsäure oder andere handelsübliche Thixotropieadditive enthalten sein. Auch können als weiterer Bestandteil (F) zur besseren Vernetzung vorzugsweise maximal 0,5 Gew, besonders bevorzugt maximal 0,3 Gew.-%, insbesondere <0,1% Gew.-% Peroxid vorhanden sein.

Enthalten sein können weitere Zusätze, die der gezielten Einstellung der Verarbeitungszeit, Anspringtemperatur und Vernetzungsgeschwindigkeit der vernetzenden Massen dienen.

Diese Inhibitoren und Stabilisatoren sind auf dem Gebiet der vernetzenden Massen sehr gut bekannt.

Zusätzlich können auch Additive hinzugefügt werden, wie beispielsweise die in EP 0 834 534 A1 beschriebenen Schwefelverbindungen, deren diesbezügliche Offenbarung auch Gegenstand dieser Anmeldung sein soll, die den Druckverformungsrest verbessern. Zusätzlich können auch Hohlkörper bzw. expandierbare Hohlkörper hinzugefügt werden. Zusätzlich können auch Treibmittel zur Erzeugung von Schäumen hinzugefügt werden.

Ein weiterer Gegenstand der vorliegenden Erfindung ist ein Verfahren zur Herstellung der additionsvernetzbaren Siliconmassen, ein Verfahren zur Herstellung der vernetzten Siliconelastomere aus den additionsvernetzbaren Siliconmassen sowie die so erhältlichen Siliconelastomer-Formteile.

Die vernetzten Siliconelastomere weisen vorzugsweise eine Reißfestigkeit von mindestens 3 N/mm², besonders bevorzugt mindestens 5 N/mm² auf. Die vernetzten Siliconelastomere weisen vorzugsweise eine Härte von 28-90 Shore A auf, da mit abnehmender Härte der Reibungskoeffizient nicht mehr auf ein sehr niedriges Niveau verringert werden kann.

Die Herstellung oder Compoundierung der Siliconmassen erfolgt durch Mischen der Polyorganosiloxane (A), (B) und Füllstoff (E). Die Vernetzung nach Zugabe von Vernetzer (C) und Hydrosilylierungskatalysator (D) erfolgt vorzugsweise durch Erwärmen, vorzugsweise bei 30 bis 250°C, bevorzugt bei mindestens 50°C, insbesondere bei mindestens 100°C, bevorzugt bei 150-210°C.

Die additionsvernetzbaren Siliconmassen eignen sich zur Herstellung von additionsvernetzenden RTV-, LSR- und HTV-Massen, wobei vorzugsweise die erste Komponente neben (A) und (E) den Hydrosilylierungskatalysator (D) und die zweite Komponente neben (A), und (E) den SiH-Vernetzer (C) enthält. (B) kann entweder in der ersten oder in der zweiten oder in beiden Komponente enthalten sein. Beim Einsatz von 1K-Katalysatoren, wie z.B. in EP 1 077 226 A1 und EP 0 994 159 A1 beschrieben, können auch einkomponentige Mischungen hergestellt werden. Es können aber auch zweikomponentige Mischungen verwendet werden, wobei die erste Komponente neben (A), (B), (E) und (C) und die zweite Komponente den Katalysator (D) enthält.

Hierzu werden die Formteile vorzugsweise mittels Spritzguss aus den erfindungsgemäßen LSR-Massen bzw. HTV-Massen oder mittels Extrusion aus den HTV-Massen hergestellt. Beispielweise lassen sich so aus den additionsvernetzbaren Siliconmassen Dichtungen erhalten, die sich insbesondere durch ihren reduzierten Reibungskoeffizienten unmittelbar nach der Vernetzung auszeichnen. Der verringerte Reibungskoeffizient erleichtert die Montage der Formteile, wenn die Dichtungen über ein Kunststoff- oder Metallteil geschoben werden müssen, wie dies z.B. bei Kabelsteckern der Fall ist. Ebenso können Schläuche mit geringem Reibungskoeffizienten extrudiert werden.

Alle vorstehenden Symbole der vorstehenden Formeln weisen ihre Bedeutungen jeweils unabhängig voneinander auf. In allen Formeln ist das Siliziumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt.

### Beispiele

### Beispiel 1 (nicht erfindungsgemäß)

### Herstellung der Grundmasse:

In einem Laborkneter wurden 260 g eines vinyldimethylsiloxy-terminierten Polydimethylsiloxans mit einer Viskosität von 20 000 mPas (25°C) und einem Vinylsiloxy-Gehalt von 0,33 Mol.-% vorgelegt, auf 150°C aufgeheizt und mit 170 g einer hydrophoben pyrogenen Kieselsäure mit einer spezifischen Oberfläche nach BET von 300 m²/g und einem Kohlenstoffgehalt von 3,9 Gew.-% versetzt. Es entstand eine hochviskose Masse, die anschließend mit 130 g eines vinyldimethylsiloxy-terminierten Polydimethylsiloxans mit einer Viskosität von 20 000 mPas (25°C) und einem Vinylsiloxy-Gehalt von 0,33 Mol.-% verdünnt wurde. Durch Kneten unter Vakuum (10 mbar) bei 150°C wurden innerhalb einer Stunde flüchtige Bestandteile entfernt.

### Herstellung der vernetzbaren Mischung:

Zu den erhaltenen 550 g Grundmasse wurden 0,50 g Ethinylcyclohexanol, 11,4 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, hinzugefügt.

Die auf diese Weise hergestellte Siliconmasse wurde anschließend in einer hydraulischen Presse bei einer Temperatur von 165°C innerhalb von 5 Minuten vernetzt.

### Beispiel 2 (nicht erfindungsgemäß)

Wie in Beispiel 1 beschrieben, jedoch wurden bei der Herstellung der vernetzbaren Mischung zusätzlich 28,0 g trimethylsiloxy-terminiertes Polydimethylsiloxan mit einer Viskosität von 35 mPas hinzugefügt. Diese Mischung wurde wie in Beispiel 1 beschrieben vernetzt.

### Beispiel 3 (nicht erfindungsgemäß)

Wie in Beispiel 1 beschrieben, jedoch wurden bei der Herstellung der vernetzbaren Mischung zusätzlich 28,0 g trimethylsiloxy-terminiertes Polydimethylsiloxan mit einer Viskosität von 100 000 mPas hinzugefügt. Diese Mischung wurde wie in Beispiel 1 beschrieben vernetzt.

### Beispiel 4 (erfindungsgemäß)

Wie in Beispiel 1 beschrieben, jedoch wurden bei der Herstellung der vernetzbaren Mischung zusätzlich 28,0 g trimethylsiloxy-terminiertes Polydimethylsiloxan mit einer Viskosität von 20 000 000 mPas hinzugefügt. Diese Mischung wurde wie in Beispiel 1 beschrieben vernetzt.

### Beispiel 5 (erfindungsgemäß)

Wie in Beispiel 1 beschrieben, jedoch wurden bei der Herstellung der vernetzbaren Mischung zusätzlich 20,0 g trimethylsiloxy-terminiertes Polydimethylsiloxan mit einer Viskosität von 10 000 000 mPas hinzugefügt. Diese Mischung wurde wie in Beispiel 1 beschrieben vernetzt.

### Beispiel 6 (nicht erfindungsgemäß)

Im Unterschied zu Beispiel 1, wurde bei der Grundmassenherstellung nicht vinyldimethylsiloxy-terminiertes Polydimethylsiloxan mit einer Viskosität von 20 000 und einem Vinylsiloxy-Gehalt von 0,33 Mol.-%, sondern vinyldimethylsiloxy-terminiertes Polydimethylsiloxan mit einer Viskosität von 500 000 mPas (25°C) und einem Vinylsiloxy-Gehalt von 0,11 Mol.-% verwendet.
Die Herstellung der vernetzbaren Mischung erfolgte wie in Beispiel 1 beschrieben, allerdings wurden zusätzlich 28,0 g trimethylsiloxy-terminiertes Polydimethylsiloxan mit einer Viskosität von 20 000 000 mPas hinzugefügt.
Diese Mischung wurde wie in Beispiel 1 beschrieben vernetzt.

### Beispiel 7 (nicht erfindungsgemäß)

Wie in Beispiel 1 beschrieben, jedoch wurden bei der Herstellung der vernetzbaren Mischung zusätzlich 28,0 g trimethylsiloxy-terminiertes Polydiorganosiloxan mit 33 Mol.-% Diphenylsiloxy- und 66 Mol.-% Dimethylsiloxy-Einheiten und einer Viskosität von 200 mPas (25°C) hinzugefügt.
Diese Mischung wurde wie in Beispiel 1 beschrieben vernetzt.

### Beispiel 8 (nicht erfindungsgemäß)

Wie in Beispiel 1 beschrieben, jedoch wurden bei der Herstellung der vernetzbaren Mischung zusätzlich 28,0 g eines Polydimethylsiloxans mit einer Viskosität von 20 000 000 mPas, welches durchschnittlich eine Trimethylsiloxy- und eine Vinyldimethlysiloxy-Gruppe am Kettenende trägt, hinzugefügt. Diese Mischung wurde wie in Beispiel 1 beschrieben vernetzt.

### Beispiel 9 (nicht erfindungsgemäß)

Wie in Beispiel 1 beschrieben, jedoch wurden bei der Herstellung der vernetzbaren Mischung zusätzlich 28,0 g eines trimethylsiloxy-terminiertes Polydimethylsiloxans mit einer Viskosität von 20 000 000 mPas, welches durchschnittlich zwei Vinylmethylsiloxy-Gruppen in der Polymerkette trägt, hinzugefügt. Diese Mischung wurde wie in Beispiel 1 beschrieben vernetzt.

**Tabelle 1**

| | Härte | Reibungskoeffizient 30 Minuten nach der Vernetzung des Siliconelastomers | Ölfilm auf der Oberfläche des Siliconelastomers nach der Vernetzung | Reibungskoeffizient nach einem Tag Lagerung | Ölfilm auf der Oberfläche des Siliconelastomers nach einem Tag Lagerung |
|---|---|---|---|---|---|
| | [Shore A] | | | | |
| Beispiel 1* | 42 | 2,5 | nein | 2,6 | nein trocken |
| Beispiel 2* | 36 | 2,5 | nein | 2,5 | nein trocken |
| Beispiel 3* | 38 | 2,4 | nein | 0,8 | ja ölig |
| Beispiel 4 | 40 | 1,2 | nein | 1,2 | nein trocken |
| Beispiel 5 | 41 | 1,1 | nein | 1,1 | nein trocken |
| Beispiel 6* | 37 | 2,2 | nein | 2,2 | nein trocken |
| Beispiel 7* | 36 | 2,4 | nein | 0,7 | ja ölig |
| Beispiel 8* | 40 | 2,1 | nein | 2,2 | nein trocken |
| Beispiel 9* | 41 | 2,3 | nein | 2,2 | nein trocken |

| | | | | | |
|---|---|---|---|---|---|
| *nicht erfindungsgemäß | | | | | |

Aus Tabelle 1 ist ersichtlich, dass durch Verwendung eines vinylfreien, hochviskosen Polydiorganosiloxans in Kombination mit einem vinylhaltigen Polydiorganosiloxan mit einem hohen Vinylgehalt direkt nach der Vernetzung ein Siliconelastomer mit einem reduzierten Reibungskoeffizienten erhalten wird. Bei der Lagerung wird bei diesen Mischungen kein schmieriger Ölfilm auf der Oberfläche des vernetzten Siliconelastomers gebildet.

**Tabelle 2**

| | Härte | Weiterreißwiderstand (ASTM D624) | Reißfestigkeit | Reißdehnung |
|---|---|---|---|---|
| | [Shore A] | [N/mm] | [N/mm²] | [%] |
| Beispiel 1* | 42 | 22 | 9,8 | 650 |
| Beispiel 2* | 36 | 17 | 7,1 | 630 |
| Beispiel 3* | 38 | 19 | 8,2 | 610 |
| Beispiel 4 | 41 | 28 | 9,7 | 750 |
| Beispiel 5 | 39 | 27 | 9,9 | 740 |
| Beispiel 7* | 36 | 19 | 7,5 | 620 |

| | | | | |
|---|---|---|---|---|
| *nicht erfindungsgemäß | | | | |

Aus Tabelle 2 ist ersichtlich, dass durch Verwendung eines vinylfreien hochviskosen Polydiorganosiloxans in Kombination mit einem vinylhaltigen Polydiorganosiloxan mit einem hohen Vinylgehalt wie in Tabelle 1 dargestellt der Reibungskoeffizient reduziert wird und zusätzlich die mechanischen Eigenschaften, wie z.B. Weiterreißwiderstand und Reißdehnung, verbessert werden.

### Beispiel 10 (nicht erfindungsgemäß)

### Herstellung der Grundmasse:

In einem Laborkneter wurden 390 g eines vinyldimethylsiloxy-terminierten Polydimethylsiloxans mit einer Viskosität von 20 000 000 mPas, welches zusätzlich Vinylmethylsiloxy-Einheiten in der Polymerkette enthält und der Anteil an Vinylsiloxy-Einheiten 0,10 Mol.-% beträgt, auf 150°C aufgeheizt und mit 170 g einer hydrophoben pyrogenen Kieselsäure mit einer spezifischen Oberfläche nach BET von 300 m²/g und einem Kohlenstoffgehalt von 3,9 Gew.-% versetzt. Durch Kneten unter Vakuum (10 mbar) bei 150°C wurden innerhalb einer Stunde flüchtige Bestandteile entfernt.

### Herstellung der vernetzbaren Mischung:

Zu der erhaltenen 550 g Grundmasse wurden 0,50 g Ethinylcyclohexanol, 11,4 g eines Mischpolymerisats aus Dimethylsiloxy-, Methylhydrogensiloxy- und Trimethylsiloxy-Einheiten mit einer Viskosität von 100 mPas bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, hinzugefügt.

Die auf diese Weise hergestellte Siliconmasse wurde anschließend in einer hydraulischen Presse bei einer Temperatur von 165°C innerhalb von 5 Minuten vernetzt.

### Beispiel 11 (nicht erfindungsgemäß)

Wie in Beispiel 10 beschrieben, jedoch wurden bei der Herstellung der vernetzbaren Mischung zusätzlich 28,0 g trimethylsiloxy-terminiertes Polydimethylsiloxan mit einer Viskosität von 20 000 000 mPas hinzugefügt. Diese Mischung wurde wie in Beispiel 10 beschrieben vernetzt.

### Beispiel 12 (nicht erfindungsgemäß)

Wie in Beispiel 10 beschrieben, jedoch wurde bei der Herstellung der Grundmasse ein vinyldimethylsiloxy-terminiertes Polydimethylsiloxans mit einer Viskosität von 20 000 000 mPas, welches zusätzlich Vinylmethylsiloxy-Einheiten in der Polymerkette enthält, mit einem Anteil an Vinylsiloxy-Einheiten von 0,25 Mol.-% verwendet. Die Herstellung der vernetzbaren Mischung und die Vernetzung der additionsvernetzenden Masse erfolgte wie in Beispiel 10 beschrieben.

### Beispiel 13 (erfindungsgemäß)

Wie in Beispiel 10 beschrieben, jedoch wurde bei der Herstellung der Grundmasse ein vinyldimethylsiloxy-terminiertes Polydimethylsiloxans mit einer Viskosität von 20 000 000 mPas, welches zusätzlich Vinylmethylsiloxy-Einheiten in der Polymerkette enthält, mit einem Anteil an Vinylsiloxy-Einheiten von 0,25 Mol.-% verwendet.
Die Herstellung der vernetzbaren Mischung erfolgte wie in Beispiel 10 beschrieben, jedoch wurden zusätzlich 28,0 g trimethylsiloxy-terminiertes Polydimethylsiloxan mit einer Viskosität von 20 000 000 mPas hinzugefügt. Diese Mischung wurde wie in Beispiel 10 beschrieben vernetzt.

**Tabelle 3**

| | Härte | Reibungskoeffizient 30 Minuten nach der Vernetzung des Siliconelastomers | Ölfilm auf der Oberfläche des Siliconelastomers nach der Vernetzung | Reibungskoeffizient nach einem Tag Lagerung | Ölfilm auf der Oberfläche des Siliconelastomers nach einem Tag Lagerung |
|---|---|---|---|---|---|
| | [Shore A] | | | | |
| Beispiel 10* | 41 | 2,5 | nein | 2,6 | nein trocken |
| Beispiel 11* | 38 | 2,4 | nein | 2,5 | nein trocken |
| Beispiel 12* | 44 | 2,5 | nein | 2,4 | nein trocken |
| Beispiel 13 | 40 | 1,3 | nein | 1,2 | nein trocken |

| | | | | | |
|---|---|---|---|---|---|
| nicht erfindungsgemäß | | | | | |

Aus Tabelle 3 ist ersichtlich, dass durch Verwendung eines vinylfreien hochviskosen Polydiorganosiloxans in Kombination mit einem vinylhaltigen Polydiorganosiloxan mit einem hohen Vinylgehalt, direkt nach der Vernetzung ein Siliconelastomer mit einem reduzierten Reibungskoeffizienten erhalten wird. Bei der Lagerung wird bei diesen Mischungen kein schmieriger Ölfilm auf der Oberfläche des vernetzten Siliconelastomers gebildet.

### Beispiel 14 (nicht erfindungsgemäß)

### Herstellung der Grundmasse:

Wie in Beispiel 1 beschrieben, allerdings wurden bei der Herstellung der Grundmasse anstatt 170 g nur 80 g der hydrophoben pyrogenen Kieselsäure mit einer spezifischen Oberfläche nach BET von 300 m²/g und einem Kohlenstoffgehalt von 3,9 Gew.-% verwendet.

### Herstellung der additionsvernetzenden Mischung:

Bei der Herstellung der additionsvernetzenden Mischung wurden nicht wie in Beispiel 1 beschrieben 11,4 g sondern lediglich 7,1 g des in Beispiel 1 eingesetzten SiH-Vernetzers verwendet. Die Vernetzung der additionsvernetzenden Mischung erfolgte wie in Beispiel 1 beschrieben.

### Beispiel 15 (erfindungsgemäß)

Wie in Beispiel 14 beschrieben, jedoch wurden bei der Herstellung der vernetzbaren Mischung zusätzlich 28,0 g trimethylsiloxy-terminiertes Polydimethylsiloxan mit einer Viskosität von 20 000 000 mPas hinzugefügt. Diese Mischung wurde wie in Beispiel 1 beschrieben vernetzt.

### Beispiel 16 (nicht erfindungsgemäß)

Wie in Beispiel 1 beschrieben, allerdings wurden bei der Herstellung der Grundmasse nicht 170 g sondern 210 g der hydrophoben pyrogenen Kieselsäure mit einer spezifischen Oberfläche nach BET von 300 m²/g und einem Kohlenstoffgehalt von 3,9 Gew.-% verwendet. Im Gegensatz zu der in Beispiel 1 verwendeten hydrophoben pyrogenen Kieselsäure, die keine Vinylgruppen auf der Kieselsäure aufweist, wurde bei der Herstellung der Grundmasse eine teilweise mit Vinlydimethylsiloxy-Einheiten funktionalisierte Kieselsäure eingesetzt.

Bei der Herstellung der additionsvernetzenden Mischung wurden nicht wie in Beispiel 1 beschrieben 11,4 g sondern 17,2 g des in Beispiel 1 eingesetzten SiH-Vernetzers verwendet. Die Vernetzung der additionsvernetzenden Mischung erfolgte wie in Beispiel 1 beschrieben.

### Beispiel 17 (erfindungsgemäß)

Wie in Beispiel 16 beschrieben, jedoch wurden bei der Herstellung der vernetzbaren Mischung zusätzlich 28,0 g trimethylsiloxy-terminiertes Polydimethylsiloxan mit einer Viskosität von 20 000 000 mPas hinzugefügt. Diese Mischung wurde wie in Beispiel 1 beschrieben vernetzt.

**Tabelle 4**

| | Härte | Reibungskoeffizient 30 Minuten nach der Vernetzung des Siliconelastomers | Ölfilm auf der Oberfläche des Siliconelastomers nach der Vernetzung | Reibungskoeffizient nach einem Tag Lagerung | Ölfilm auf der Oberfläche des Siliconelastomers nach einem Tag Lagerung |
|---|---|---|---|---|---|
| | [Shore A] | | | | |
| Beispiel 14* | 23 | 3,0 | nein | 2,8 | nein trocken |
| Beispiel 15 | 20 | 2,1 | nein | 2,0 | nein trocken |
| Beispiel 1* | 42 | 2,5 | nein | 2,6 | nein trocken |
| Beispiel 4 | 40 | 1,2 | nein | 1,2 | nein trocken |
| Beispiel 16* | 72 | 1,1 | nein | 1,1 | nein trocken |
| Beispiel 17 | 67 | 0,7 | nein | 0,7 | nein trocken |

| | | | | | |
|---|---|---|---|---|---|
| *nicht erfindungsgemäß | | | | | |

Aus Tabelle 4 ist ersichtlich, dass durch Verwendung eines vinylfreien, hochviskosen Polydiorganosiloxans in Kombination mit einem vinylhaltigen Polydiorganosiloxan mit einem hohen Vinylgehalt direkt nach der Vernetzung ein Siliconelastomer mit einem reduzierten Reibungskoeffizienten erhalten wird. Bei der Lagerung wird bei diesen Mischungen kein schmieriger Ölfilm auf der Oberfläche des vernetzten Siliconelastomers gebildet. Niedrige Reibungskoeffizient können insbesondere im Härtebereich von 30-90 Shore A realisiert werden.

Die Charakterisierung der Siliconelastomereigenschaften erfolgten gemäß DIN 53505 (Shore A), DIN 53504-S1 (Reißfestigkeit und Reißdehnung), ASTM D 624 B (Weiterreißwiderstand).
Der Reibungskoeffizient wurde folgendermaßen bestimmt: Vernetzte 2 mm dicke Siliconelastomerfolien (80*30 mm) wurden an einem Metallschlitten mit einem Gewicht von 190 g und einer Auflagefläche von 24 cm² befestigt und mit einer Geschwindigkeit von 100 cm/min über eine Stahlplatte gezogen. Die Berechnung des Reibungskoeffizienten erfolgte nach folgender Formel: µ = Reibungskraft/Gewichtskraft.

## Patentansprüche

1. Additionsvernetzbare Siliconmassen, enthaltend
(A) 100 Gewichtsteile Alkenylgruppen aufweisendes Polydiorganosiloxan mit einer Viskosität von 5000 bis 50 000 000 mPas bei 25°C, mindestens 2 Alkenylgruppen pro Molekül und mindestens 0,15 Mol.-% Alkenylsiloxaneinheiten, bezogen auf alle Siloxaneinheiten,
(B) 1 bis 50 Gewichtsteile Polydiorganosiloxan mit einer Viskosität von mindestens 5 000 000 mPas bei 25°C, wobei das Polydiorganosiloxan keine Alkenylgruppen aufweist,
(C) SiH-funktionelles Vernetzungsmittel,
(D) Hydrosilylierungskatalysator, und
(E) 3-90 Gewichtsteile eines Füllstoffs mit einer spezifischen Oberfläche nach BET von mindestens 50 m²/g.

2. Additionsvernetzbare Siliconmassen nach Anspruch 1, bei denen das Alkenylgruppen haltige Polydiorganosiloxan (A) aufgebaut ist aus mindestens 2 Einheiten, die ausgewählt werden aus den allgemeinen Formeln (1) und (2)
[R₂R¹SiO_{1/2}] (1),
[RR¹SiO_{2/2}] (2),
und weiteren Einheiten, die ausgewählt werden aus den allgemeinen Formeln (3) und (4)
[R₃SiO_{1/2}] (3),
[R₂SiO_{2/2}] (4),
wobei
**R** einwertige, gegebenenfalls halogen- oder cyanosubstituierte, über SiC-gebundene C₁-C₁₈-Kohlenwasserstoffreste, die frei sind von aliphatischen Kohlenstoff-Kohlenstoff Mehrfachbindungen und
**R¹** einwertige, gegebenenfalls halogen- oder cyanosubstituierte, gegebenenfalls über eine organische zweiwertige Gruppe an Silicium gebundene C₁-C₁₀-Alkenylgruppen bedeuten.

3. Additionsvernetzbare Siliconmassen nach Anspruch 1 oder 2, bei denen das Polydiorganosiloxan (B) aufgebaut ist aus Einheiten der allgemeinen Formeln (3) und (4) gemäss Anspruch 2.

4. Additionsvernetzbare Siliconmassen nach Anspruch 1 bis 3, bei denen mindestens 80% der Gruppen **R** des Polydiorganosiloxans (B) mit den Gruppen **R** des Polydiorganosiloxans (A) übereinstimmen.

5. Additionsvernetzbare Siliconmassen nach Anspruch 1 bis 4, bei denen das SiH-funktionelle Vernetzungsmittel (C) eine siliciumorganische Verbindung oder eine Mischung aus mindestens 2 siliciumorganischen Verbindungen ist, welche mindestens zwei an Silicium gebundene Wasserstoffatome pro Molekül enthalten.

6. Additionsvernetzbare Siliconmassen nach Anspruch 1 bis 5, bei denen die Hydrosilylierungskatalysatoren (D) ausgewählt werden aus Metallen und deren Verbindungen aus der Gruppe Platin, Rhodium, Palladium, Ruthenium und Iridium.

7. Additionsvernetzbare Siliconmassen nach Anspruch 1 bis 6, bei denen der Füllstoff (E) ausgewählt wird aus gefällter und pyrogener Kieselsäure und Ruß.

8. Verfahren zur Herstellung der additionsvernetzbaren Siliconmassen gemäss Anspruch 1 bis 7, bei dem zu einer Mischung aus Polyodiorganosiloxanen (A) und (B) und Füllstoff (E) der Vernetzer (C) und der Hydrosilylierungskatalysator (D)gegeben werden.

9. Formteile herstellbar durch Vernetzung der additionsvernetzbaren Siliconmassen gemäss Anspruch 1 bis 7.

## Claims

1. Addition-crosslinkable silicone compositions, comprising
(A) 100 parts by weight of polydiorganosiloxane which has alkenyl groups and whose viscosity is from 5000 to 50 000 000 mPas at 25°C, having at least 2 alkenyl groups per molecule, and at least 0.15 mol% of alkenylsiloxane units, based on all of the siloxane units,
(B) from 1 to 50 parts by weight of polydiorganosiloxane whose viscosity is at least 5 000 000 mPas at 25°C, where the polydiorganosiloxane has no alkenyl groups,
(C) SiH-functional crosslinking agent,
(D) hydrosilylation catalyst, and
(E) from 3 to 90 parts by weight of a filler whose BET specific surface area is at least 50 m²/g.

2. Addition-crosslinkable silicone compositions according to claim 1, in which the polydiorganosiloxane (A) containing alkenyl groups is composed of at least two units which are selected from the general formulae (1) and (2)
[R₂R¹SiO_{1/2}] (1),
[RR¹SiO_{2/2}] (2),
and further units which are selected from the general formulae (3) and (4)
[R₃SiO_{1/2}] (3),
[R₂SiO_{2/2}] (4),
where
**R** are monovalent, if appropriate halogen- or cyano-substituted, C₁-C₁₈ hydrocarbon moieties bonded by way of SiC and free from aliphatic carbon-carbon multiple bonds, and
**R¹** are monovalent, if appropriate halogen- or cyano-substituted, C₁-C₁₀-alkenyl groups, if appropriate bonded by way of an organic divalent group to silicon.

3. Addition-crosslinkable silicone compositions according to claim 1 or 2, in which the polydiorganosiloxane (B) is composed of units of the general formulae (3) and (4) according to claim 2.

4. Addition-crosslinkable silicone compositions according to any of claims 1 to 3, in which at least 80% of the groups **R** of the polydiorganosiloxane (B) are the same as the groups **R** of the polydiorganosiloxane (A).

5. Addition-crosslinkable silicone compositions according to any of claims 1 to 4, in which the SiH-functional crosslinking agent (C) is an organosilicon compound, or a mixture composed of at least two organosilicon compounds, which contain, per molecule, at least two hydrogen atoms bonded to silicon.

6. Addition-crosslinkable silicone compositions according to any of claims 1 to 5, in which the hydrosilylation catalysts (D) are selected from metals and their compounds from the group of platinum, rhodium, palladium, ruthenium, and iridium.

7. Addition-crosslinkable silicone compositions according to any of claims 1 to 6, in which the filler (E) is selected from precipitated and fumed silica, and carbon black.

8. Process for the preparation of the addition-crosslinkable silicone compositions according to any of claims 1 to 7, in which the crosslinking agent (C) and the hydrosilylation catalyst (D) are added to a mixture composed of polydiorganosiloxanes (A) and (B) and filler (E).

9. Moldings that can be produced via crosslinking of the addition-crosslinkable silicone compositions according to any of claims 1 to 7.

## Revendications

1. Masses siliconées réticulables par addition, contenant
(A) 100 parties en poids de polydiorganosiloxane présentant des groupes alcényle, présentant une viscosité de 5000 à 50 000 000 mPa.s à 25°C, au moins 2 groupes alcényle par molécule et au moins 0,15% en mole d'unités alcénylsiloxane, par rapport à toutes les unités siloxane,
(B) 1 à 50 parties en poids de polydiorganosiloxane présentant une viscosité d'au moins 5 000 000 mPa.s à 25°C, le polydiorganosiloxane ne présentant pas de groupes alcényle,
(C) un réticulant à fonctionnalité SiH,
(D) un catalyseur d'hydrosilylation, et
(E) 3-90 parties en poids d'une charge présentant une surface spécifique selon BET d'au moins 50 m²/g.

2. Masses siliconées réticulables par addition selon la revendication 1, dans lesquelles le polydiorganosiloxane (A) contenant des groupes alcényle est constitué par au moins 2 unités qui sont choisies parmi les formules générales (1) et (2)
[R₂R¹SiO_{1/2}] (1),
[RR¹SiO_{2/2}] (2),
et par d'autres unités qui sont choisies parmi les formules générales (3) et (4)
[R₃SiO_{1/2}] (3),
[R₂SiO_{2/2}] (4),
où
R signifie des radicaux hydrocarbonés en C₁-C₁₈ monovalents, le cas échéant substitués par halogène ou cyano, liés par SiC, qui sont exempts de liaisons multiples aliphatiques carbone-carbone et
R¹ signifie des groupes alcényle en C₁-C₁₀ monovalents, le cas échéant substitués par halogène ou cyano, le cas échéant liés au silicium via un groupe organique divalent.

3. Masses siliconées réticulables par addition selon la revendication 1 ou 2, dans lesquelles le polydiorganosiloxane (B) est constitué par des unités des formules générales (3) et (4) selon la revendication 2.

4. Masses siliconées réticulables par addition selon la revendication 1 à 3, dans lesquelles au moins 80% des groupes R du polydiorganosiloxane (B) correspondent aux groupes R du polydiorganosiloxane (A).

5. Masses siliconées réticulables par addition selon la revendication 1 à 4, dans lesquelles le réticulant (C) à fonctionnalité SiH est un composé organosilicié ou un mélange d'au moins 2 composés organosiliciés, qui contien(nen)t au moins deux atomes d'hydrogène liés au silicium par molécule.

6. Masses siliconées réticulables par addition selon la revendication 1 à 5, dans lesquelles les catalyseurs d'hydrosilylation (D) sont choisis parmi les métaux et leurs composés du groupe formé par le platine, le rhodium, le palladium, le ruthénium et l'iridium.

7. Masses siliconées réticulables par addition selon la revendication 1 à 6, dans lesquelles la charge (E) est choisie parmi les silices précipitées et pyrogènes et la suie.

8. Procédé pour la préparation des masses siliconées réticulables par addition selon la revendication 1 à 7, dans lesquelles on ajoute à un mélange des polydiorganosiloxanes (A) et (B) et de la charge (E) le réticulant (C) et le catalyseur d'hydrosilylation (D).

9. Pièces façonnées pouvant être préparées par réticulation des masses siliconées réticulables par addition selon la revendication 1 à 7.
